# EUROPÄISCHE PATENTSCHRIFT

(11) **EP 4 260 427 B1**
(45) Veröffentlichungstag und Bekanntmachung des Hinweises auf die Patenterteilung: **08.01.2025**
(21) Anmeldenummer: 21819100.5
(22) Anmeldetag: 22.11.2021
(51) Int. Cl.: H02J 7/00

(54) **LADESCHALTUNG UND VERFAHREN ZUM AUFLADEN EINES ELEKTRISCHEN ENERGIESPEICHERS UND ELEKTROFAHRZEUG**
CHARGING CIRCUIT AND METHOD FOR CHARGING AN ELECTRICAL ENERGY STORE, AND ELECTRIC VEHICLE
CIRCUIT DE CHARGE ET PROCÉDÉ DE CHARGE D'UN ACCUMULATEUR D'ÉNERGIE ÉLECTRIQUE ET VÉHICULE ÉLECTRIQUE

(30) Priorität: 10.12.2020 DE 102020215598
(43) Veröffentlichungstag der Anmeldung: 18.10.2023
(73) Patentinhaber: Robert Bosch GmbH, 70442 Stuttgart (DE)
(72) Erfinder: MADER, Bernhard, 71394 Kernen (DE); BLUM, Oliver, 71272 Renningen (DE)
(86) Internationale Anmeldenummer: PCT/EP2021/082447
(87) Internationale Veröffentlichungsnummer: WO 2022/122359

(56) Entgegenhaltungen:
- JP-A- 2019 041 497

## Beschreibung

Die vorliegende Erfindung betrifft eine Ladeschaltung zum Aufladen eines elektrischen Energiespeichers sowie ein Elektrofahrzeug mit einer solchen Ladeschaltung. Die vorliegende Erfindung betrifft ferner ein Verfahren zum Aufladen eines elektrischen Energiespeichers.

### Stand der Technik

Ganz oder zumindest teilweise elektrisch angetriebene Fahrzeuge verfügen über einen elektrischen Energiespeicher, wie beispielsweise eine Traktionsbatterie.

Dieser elektrische Energiespeicher kann von einer externen Energiequelle mittels einer geeigneten Ladeeinrichtung aufgeladen werden. Insbesondere für hohe Ladeleistungen wird die elektrische Energie dabei in Form einer Gleichspannung bereitgestellt. Die bereitgestellte Gleichspannung kann hierbei dem Spannungsniveau des aufzuladenden elektrischen Energiespeichers entsprechen. Typische Gleichspannungs-Ladeinfrastrukturen sind gegenwärtig auf eine maximale Ladeendspannung von etwa 500 V ausgelegt. Die Regelung des Ladestroms wird während des Ladevorgangs üblicherweise von der Ladeinfrastruktur vorgenommen.

Darüber hinaus existieren Sonderfälle von elektrisch betriebenen Fahrzeugen mit höheren Batteriespannungen, beispielsweise von 800 V oder mehr. Um derartige Fahrzeuge an einer konventionellen Ladeinfrastruktur aufzuladen, muss die von der Ladeinfrastruktur bereitgestellte elektrische Spannung auf das höhere Spannungsniveau konvertiert werden.

Die Druckschrift DE 10 2017 123 184 A1 beschreibt eine Vorrichtung und ein Verfahren zum Laden eines elektrischen Energiespeichersystems mit einer ersten Energiespeicherbank und einer zweiten Energiespeicherbank. Eine anliegende Ladespannung entspricht dabei der Nennspannung der Energiespeicherbänke. Zum Aufladen werden die einzelnen Energiespeicherbänke parallel geschaltet.

Die Druckschrift JP-2019-041497 A beschreibt eine Schaltungsanordnung, bei der einzelne Batteriezellen über einen Gleichspannungswandler entladen werden können und die entnommenen Energie über den Gleichspannungswandler der gesamten Batterieanordnung wieder zur Verfügung gestellt werden kann.

### Offenbarung der Erfindung

Die vorliegende Erfindung schafft eine Ladeschaltung und ein Verfahren zum Aufladen eines elektrischen Energiespeichers sowie ein Elektrofahrzeug mit den Merkmalen der unabhängigen Patentansprüche. Weitere vorteilhafte Ausführungsformen sind Gegenstand der abhängigen Patentansprüche.

Demgemäß ist vorgesehen:
Eine Ladeschaltung zum Aufladen eines elektrischen Energiespeichers mit einem Eingangsanschluss, einem ersten Ausgangsanschluss sowie einem zweiten Ausgangsanschluss und einem Gleichspannungswandler. Der Eingangsanschluss ist dazu ausgelegt, mit einer elektrischen Gleichspannungsquelle verbunden zu werden. Der erste Ausgangsanschluss ist dazu ausgelegt, mit einem ersten Teil des Energiespeichers verbunden zu werden. Der zweite Ausgangsanschluss ist dazu ausgelegt, mit einem zweiten Teil des Energiespeichers verbunden zu werden. Der Gleichspannungswandler ist an einem Eingang des Gleichspannungswandlers mit dem Eingangsanschluss der Ladeschaltung elektrisch verbunden. Ferner ist der Gleichspannungswandler an einem Ausgang des Gleichspannungswandlers mit dem zweiten Ausgangsanschluss der Ladeschaltung elektrisch verbunden. Darüber hinaus ist der Eingangsanschluss der Ladeschaltung elektrisch direkt mit dem ersten Ausgangsanschluss der Ladeschaltung verbunden. Der Gleichspannungswandler ist dazu ausgelegt, eine von der Gleichspannungsquelle bereitgestellte elektrische Spannung in eine elektrische Spannung zu konvertieren, die dazu geeignet ist, den zweiten Teil des elektrischen Energiespeichers aufzuladen, und ist ferner dazu ausgelegt, den zweiten Teil des elektrischen Energiespeichers mit dieser elektrischen Spannung aufzuladen.

Weiterhin ist vorgesehen:

Ein Elektrofahrzeug mit einem elektrischen Energiespeicher und einer erfindungsgemäßen Ladeschaltung zum Aufladen des elektrischen Energiespeichers. Der elektrische Energiespeicher umfasst einen ersten Anschlusspunkt, einen zweiten Anschlusspunkt und einen Mittenanschluss. Ein erster Teil des elektrischen Energiespeichers ist mit dem ersten Anschlusspunkt und dem Mittenanschluss elektrisch verbunden. Ein zweiter Teil des elektrischen Energiespeichers ist mit dem zweiten Anschlusspunkt und dem Mittenanschluss elektrisch verbunden ist.

### Schließlich ist vorgesehen:

Ein Verfahren zum Aufladen eines elektrischen Energiespeichers mit einem Schritt zum direkten elektrischen Verbinden eines Eingangsanschlusses einer Ladeschaltung mit einem ersten Teil des elektrischen Energiespeichers. Weiterhin umfasst das Verfahren einen Schritt zum Konvertieren einer elektrischen Spannung am Eingangsanschluss der Ladeschaltung in eine weitere elektrische Spannung und einen Schritt zum Bereitstellen der weiteren elektrischen Spannung an einem zweiten Teil des elektrischen Energiespeichers.

### Vorteile der Erfindung

Der vorliegenden Erfindung liegt die Erkenntnis zugrunde, dass eine Nennspannung von elektrischen Energiespeichern in Elektrofahrzeugen eine maximale Ladespannung von konventionellen Ladestationen überschreiten kann. Um derartige elektrische Energiespeicher an konventionellen Ladestationen aufladen zu können, muss daher eine Ladeschaltung vorgesehen werden, welche das Aufladen der elektrischen Energiespeicher mit einer hohen Nennspannung ermöglicht. Solche Ladeschaltungen sind in der Regel relativ komplex und verursachen signifikante Kosten. Darüber hinaus entstehen bei einer Gleichspannungswandlung auch elektrische Verluste, wodurch der Wirkungsgrad für das Aufladen des Energiespeichers verringert wird.

Es ist daher eine Idee der vorliegenden Erfindung, dieser Erkenntnis Rechnung zu tragen und ein möglichst einfaches und effizientes Aufladen von elektrischen Energiespeichern zu ermöglichen, wobei als Ladespannung eine elektrische Gleichspannung verwendet wird, deren Spannungshöhe unterhalb der Nennspannung des elektrischen Energiespeichers liegt. Hierzu ist es vorgesehen, die von einer elektrischen Energiequelle, wie beispielsweise einer Ladestation bereitgestellte elektrische Spannung nur an einem zu der Ladespannung korrespondierenden Teil des elektrischen Energiespeichers bereitzustellen. Darüber hinaus wird der verbleibende Teil des elektrischen Energiespeichers über einen Gleichspannungswandler mit elektrischer Energie versorgt, wobei der Gleichspannungswandler ebenfalls von der Ladestation gespeist wird. Auf diese Weise kann der erste Teil des elektrischen Energiespeichers direkt von der Ladestation gespeist werden, ohne dass hierbei innerhalb der Ladeschaltung weitere Verluste entstehen. Darüber hinaus kann der Gleichspannungswandler die elektrische Ladespannung für den verbleibenden Teil des elektrischen Energiespeichers entsprechend den Spannungsbedingungen für das Aufladen des elektrischen Energiespeichers anpassen. Auf diese Weise kann durch die Summe der von der Ladestation bereitgestellten Spannung und die weitere elektrische Spannung, die durch den Gleichspannungswandler bereitgestellt wird, eine elektrische Spannung bereitgestellt werden, welche dazu geeignet ist, auch elektrische Energiespeicher aufzuladen, deren Endspannung oberhalb der Ladespannung von der Ladestation liegt.

Da hierbei jedoch nur die Teilspannung für den zweiten Teil des elektrischen Energiespeichers mittels des Gleichspannungswandlers konvertiert werden muss, sind die elektrischen Verluste des Gleichspannungswandlers geringer als bei einer Ladeschaltung, bei welcher die Ladespannung für den elektrischen Energiespeicher vollständig über den Gleichspannungswandler bereitgestellt wird. Somit kann der Gesamtwirkungsgrad für das Aufladen des elektrischen Energiespeichers gesteigert werden.

Ferner muss durch den Gleichspannungswandler in der erfindungsgemäßen Ladeschaltung auch nur ein Teil der elektrischen Energie für das Aufladen des elektrischen Energiespeichers konvertiert werden. Daher kann der Gleichspannungswandler entsprechend geringer dimensioniert werden.

### Gemäß einer Ausführungsform sind ein Anschlusspunkt des ersten Ausgangsanschlusses und ein Anschlusspunkt des zweiten Ausgangsanschlusses elektrisch miteinander verbunden. Dieser Knotenpunkt, der durch den Anschlusspunkt des ersten Ausgangsanschlusses und den Anschlusspunkt des zweiten Ausgangsanschlusses, die miteinander verbunden sind, gebildet wird, kann mit einem Mittenanschluss des elektrischen Energiespeichers verbunden werden.

Die jeweils verbleibenden Anschlusspunkte der beiden Ausgangsanschlüsse der Ladeschaltung können entsprechend mit den Außenanschlüssen des elektrischen Energiespeichers verbunden werden. Entsprechend kann ein elektrischer Energiespeicher mit einem Mittenanschluss mittels der Ladeschaltung kontaktiert und aufgeladen werden.

Gemäß einer Ausführungsform ist der Gleichspannungswandler dazu ausgelegt, den Eingang des Gleichspannungswandlers von dem Ausgang des Gleichspannungswandlers galvanisch zu trennen. Die galvanische Trennung kann beispielsweise mittels eines entsprechenden Transformators oder Ähnlichem erfolgen. Auf diese Weise stellt der Gleichspannungswandler am Ausgang eine potenzialfreie elektrische Gleichspannung bereit.

Gemäß einer Ausführungsform umfasst die Ladeschaltung eine Steuereinrichtung. Die Steuereinrichtung ist dazu ausgelegt, eine Ausgangsspannung und/oder einen Ausgangsstrom des Gleichspannungswandlers zu regeln. Insbesondere kann die Steuereinrichtung den Ausgangsstrom und/oder die Ausgangsspannung des Gleichspannungswandlers gemäß vorbestimmter Parameter und/oder Sollwerte einstellen.

Gemäß einer Ausführungsform ist die Steuereinrichtung dazu ausgelegt, die Ausgangsspannung des Gleichspannungswandlers unter Verwendung einer elektrischen Spannung an dem ersten Ausgangsanschluss einzustellen. Hierzu kann beispielsweise ein geeigneter Stromsensor am Ausgangsanschluss oder am elektrisch mit dem Ausgangsanschluss verbundenen Eingangsanschluss vorgesehen sein. Auf diese Weise kann die Ausgangsspannung des Gleichspannungswandlers korrespondierend zu den Spannungsverhältnissen am ungeregelten ersten Ausgangsanschluss der Ladeschaltung eingestellt werden.

Gemäß einer Ausführungsform ist die Steuereinrichtung dazu ausgelegt, am Ausgang des Gleichspannungswandlers eine elektrische Spannung einzustellen, sodass ein Verhältnis der elektrischen Spannung am Ausgang des Gleichspannungswandler zu einer elektrischen Zielspannung für den zweiten Teil des Energiespeichers einem vorgegebenen Verhältnis einer elektrischen Spannung am ersten Ausgangsanschluss zu einer elektrischen Zielspannung für den ersten Teil des Energiespeichers entspricht.

Gemäß einer Ausführungsform ist die Steuereinrichtung dazu ausgelegt, den Ausgangsstrom des Gleichspannungswandlers unter Verwendung eines elektrischen Ausgangsstroms und/oder einer elektrischen Spannung am ersten Ausgangsanschluss einzustellen. Hierzu können beispielsweise am ersten Ausgangsanschluss geeignete Sensoren zur Erfassung des elektrischen Stroms und/oder der elektrischen Spannung vorgesehen sein.

Gemäß einer Ausführungsform ist die Steuereinrichtung dazu ausgelegt, am Ausgang des Gleichspannungswandlers einen elektrischen Ausgangsstrom einzustellen, sodass ein Verhältnis des Ausgangsstroms des Gleichspannungswandlers zu einem Zielausgangsstrom für den zweiten Teil des elektrischen Energiespeichers einem Verhältnis des Ausgangsstroms am ersten Ausgangsanschluss zu einem Zielausgangsstrom für den ersten Teil des Energiespeichers entspricht. Auf diese Weise können an den beiden Ausgangsanschlüssen der Ladeschaltung jeweils zueinander korrespondierende elektrische Ladeströme für die entsprechenden Teile des elektrischen Energiespeichers eingestellt werden.

Darüber hinaus können die beschriebenen Regelungen für die elektrischen Spannungen und die elektrischen Ströme an den Ausgangsanschlüssen der Ladeschaltung auch in geeigneter Weise miteinander kombiniert werden. Beispielsweise kann primär ein konstantes Verhältnis der Ladespannungen eingeregelt werden, wobei als weitere Bedingung eine maximal zulässige Differenz für das Verhältnis der Ladeströme vorgegeben werden kann. Alternativ können auch primär die Ladeströme eingeregelt werden, wobei als weitere Rahmenbedingung eine maximale Abweichung für die Spannungsverhältnisse vorgegeben werden kann.

### Kurze Beschreibung der Zeichnungen

Weitere Merkmale und Vorteile der Erfindung werden nachfolgend anhand der Figuren erläutert. Dabei zeigen:
Fig. 1: eine schematische Darstellung eines Blockschaubildes für eine Ladeschaltung zum Aufladen eines elektrischen Energiespeichers gemäß einer Ausführungsform; und
Fig. 2: ein Ablaufdiagramm, wie es einem Verfahren zum Aufladen eines elektrischen Energiespeichers gemäß einer Ausführungsform zugrunde liegt.

### Beschreibung von Ausführungsformen

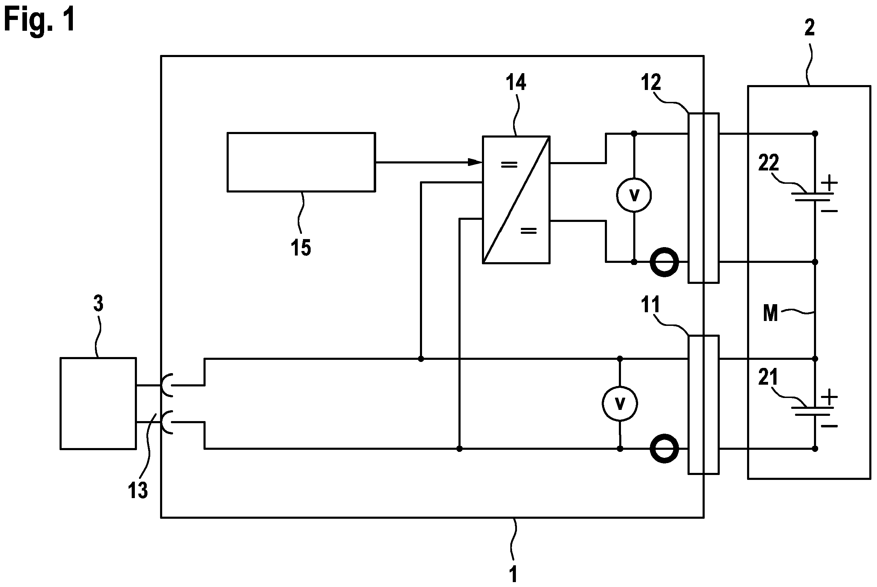

Figur 1 zeigt eine schematische Darstellung eines Blockschaubildes einer Ladeschaltung 1 zum Aufladen eines elektrischen Energiespeichers 2 gemäß einer Ausführungsform. Die Ladeschaltung kann zum Beispiel von einer Gleichspannungsquelle, wie beispielsweise einer Ladestation 3 mit elektrischer Energie versorgt werden. Der elektrische Energiespeicher 2 kann insbesondere in zwei Teile 21 und 22 unterteilt werden. Die beiden Teile 21, 22 des elektrischen Energiespeichers können über einen Mittenanschluss M elektrisch miteinander verbunden sein. Dieser Mittenanschluss M des Energiespeichers kann als elektrischer Kontakt herausgeführt werden. Somit stellt der erste Teil 21 des elektrischen Energiespeichers 2 seine elektrische Energie zwischen einem ersten Außenanschluss und dem Mittenanschluss M bereit. Der zweite Teil 22 des elektrischen Energiespeichers 2 stellt seine elektrische Energie zwischen dem Mittenanschluss M und einem zweiten Außenanschluss bereit. Entsprechend liegt die volle Spannung des elektrischen Energiespeichers 2 zwischen dem ersten Außenanschluss und dem zweiten Außenanschluss an.

Die Ladeschaltung 1 zum Aufladen des elektrischen Energiespeichers 2 umfasst einen Eingangsanschluss 13. Dieser Eingangsanschluss 13 kann mit der oben bereits erwähnten Gleichspannungsquelle 3 verbunden werden. Ein erster Ausgangsanschluss 11 der Ladeschaltung 1 kann mit dem ersten Teil 21 des elektrischen Energiespeichers 2 elektrisch verbunden werden. Ein zweiter Ausgangsanschluss 12 der Ladeschaltung 1 kann mit den Anschlüssen des zweiten Teils 22 des elektrischen Energiespeichers 2 verbunden werden. Mit anderen Worten, der erste Teil 21 des elektrischen Energiespeichers 2 wird über die am ersten Ausgangsanschluss 11 der Ladeschaltung 1 bereitgestellte elektrische Energie aufgeladen, und ein zweiter Teil 22 des elektrischen Energiespeichers 2 wird über die am zweiten Ausgangsanschluss 12 der Ladeschaltung 1 bereitgestellte elektrische Energie aufgeladen.

Der erste Ausgangsanschluss 11 der Ladeschaltung 1 ist direkt elektrisch mit dem Eingangsanschluss 13 der Ladeschaltung 1 verbunden. Entsprechend liegt am ersten Ausgangsanschluss 11 der Ladeschaltung 1 und somit am ersten Teil 21 des elektrischen Energiespeichers 2 die von der Gleichspannungsquelle 3 bereitgestellte elektrische Spannung vollständig an.

Darüber hinaus umfasst die Ladeschaltung 1 einen Gleichspannungswandler 14. Dieser Gleichspannungswandler 14 ist an seinem Eingang ebenfalls mit dem Eingangsanschluss 13 der Ladeschaltung 1 verbunden. Der Ausgang des Gleichspannungswandlers 14 ist elektrisch mit dem zweiten Ausgangsanschluss 12 der Ladeschaltung 1 und daher auch mit dem zweiten Teil 22 des elektrischen Energiespeichers 2 verbunden. Entsprechend kann der zweite Teil 22 des elektrischen Energiespeichers 2 mit einer Gleichspannung aufgeladen werden, die von dem Gleichspannungswandler 14 bereitgestellt wird. Der Gleichspannungswandler 14 wandelt dabei die von der Gleichspannungsquelle 3 bereitgestellte elektrische Spannung in eine elektrische Spannung, die dazu geeignet ist, den zweiten Teil 22 des elektrischen Energiespeichers 2 aufzuladen.

Zum Aufladen des elektrischen Energiespeichers 2 wird somit von der Gleichspannungsquelle 3 eine elektrische Gleichspannung bereitgestellt, die dazu geeignet ist, den ersten Teil 21 des elektrischen Energiespeichers 2 direkt aufzuladen. Darüber hinaus kann der Gleichspannungswandler 14 der Ladeschaltung 1 die von der Gleichspannungsquelle 3 bereitgestellte elektrische Spannung in eine weitere elektrische Spannung konvertieren, die dazu geeignet ist, den zweiten Teil 22 des elektrischen Energiespeichers 2 aufzuladen. Hierbei kann der Gleichspannungswandler 14 beispielsweise von einer Steuereinrichtung 15 angesteuert werden. Beispielsweise kann die Steuereinrichtung 15 geeignete Steuersignale, beispielsweise pulsbreitenmodulierte Steuersignale an dem Gleichspannungswandler 14 bereitstellen, um am Ausgang des Gleichspannungswandlers 14 eine gewünschte elektrische Spannung bereitzustellen.

Insbesondere wenn der erste Teil 21 und der zweite Teil 22 des elektrischen Energiespeichers 2 an einem Mittenanschluss M elektrisch miteinander verbunden sind und somit auch ein Anschlusspunkt des ersten Ausgangsanschlusses 11 der Ladeschaltung 1 und ein Anschlusspunkt des zweiten Ausgangsanschlusses 12 der Ladeschaltung 1 elektrisch miteinander verbunden sind, ist es erforderlich, dass der Gleichspannungswandler 14 eine potenzialfreie Ausgangsspannung bereitstellt. Hierzu kann in dem Gleichspannungswandler 14 zwischen Eingang und Ausgang des Gleichspannungswandlers 14 eine galvanische Trennung vorgesehen sein.

Diese galvanische Trennung kann beispielsweise mittels eines geeigneten Transformators oder Ähnlichem erfolgen.

Die Steuereinrichtung 15 der Ladeschaltung 1 kann die Ausgangsspannung und/oder den Ausgangsstrom des Gleichspannungswandlers gemäß beliebiger geeigneter Strategien einstellen. Beispielsweise kann in dem Gleichspannungswandler 14 ein festes Übersetzungsverhältnis, beispielsweise ein Übersetzungsverhältnis von 1:1 vorgesehen sein. Entsprechend variiert die Ausgangsspannung des Gleichspannungswandlers 14 analog zu der elektrischen Spannung, die von der Gleichspannungsquelle 3 bereitgestellt wird und somit am ersten Ausgangsanschluss 11 der Ladeschaltung 1 anliegt.

Weiterhin kann beispielsweise die Ausgangsspannung des Gleichspannungswandlers 14 gemäß beliebiger weiterer Strategien eingeregelt werden. Zum Beispiel kann für die Regelung der Ausgangsspannung des Gleichspannungswandlers 14 vorgegeben werden, dass ein Verhältnis zwischen Ausgangsspannung des Gleichspannungswandlers und Nennspannung des zweiten Teils 22 des elektrischen Energiespeichers 2 einem Verhältnis zwischen elektrischer Spannung am ersten Ausgangsanschluss 11 der Ladeschaltung 1 (entsprechend der elektrischen Spannung von der Gleichspannungsquelle 3) und der Nennspannung für den ersten Teil 21 des elektrischen Energiespeichers 2 entspricht.

Ferner ist es auch möglich, die Ansteuerung des Gleichspannungswandlers 14 auf Basis von Vorgaben für die Ausgangsströme bzw. Ladeströme auszuführen. Zum Beispiel kann der Gleichspannungswandler 14 derart angesteuert werden, dass ein elektrischer Ausgangsstrom des Gleichspannungswandlers dem elektrischen Strom entspricht, mit dem der erste Teil 21 des elektrischen Energiespeichers aufgeladen wird. Darüber hinaus sind auch beliebige andere fest vorgegebene Verhältnisse zwischen dem Ladestrom für den ersten Teil 21 des elektrischen Energiespeichers 2 und dem Ladestrom für den zweiten Teil 22 des elektrischen Energiespeichers 2 möglich.

Ferner können die Vorgaben für die Ladespannungen und die Ladeströme auch in beliebiger Weise miteinander kombiniert werden. Beispielsweise können als primäre Vorgabe ein festes Verhältnis für die Ladeströme in dem ersten Teil 21 und dem zweiten Teil 22 des elektrischen Energiespeichers 2 vorgegeben werden. Dabei können als sekundäre Vorgabe maximale Abweichungen für die hierbei bereitgestellten elektrischen Spannungen oder die Verhältnisse zwischen bereitgestellten Spannungen und Nennspannungen der jeweiligen Teile 21, 22 des elektrischen Energiespeichers 2 spezifiziert werden. Alternativ können auch feste Spannungen oder Spannungsverhältnisse in Bezug auf die Nennspannungen der jeweiligen Teile 21, 22 des elektrischen Energiespeichers vorgegeben werden, wobei als sekundäre Rahmenbedingungen eine maximale Abweichung der elektrischen Ströme oder des Verhältnisses der elektrischen Ströme zueinander vorgegeben werden können. Selbstverständlich sind auch beliebige andere weitere Vorgaben für das Einstellen der elektrischen Spannung und/oder des elektrischen Stroms am Ausgang des Gleichspannungswandlers 14 möglich.

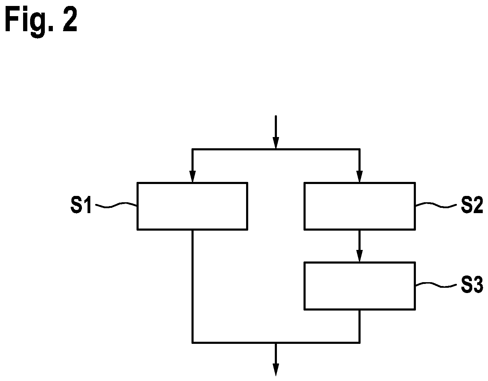

Figur 2 zeigt eine schematische Darstellung eines Ablaufdiagramms eines Verfahrens zum Aufladen eines elektrischen Energiespeichers gemäß einer Ausführungsform. Das Verfahren kann grundsätzlich beliebige Schritte umfassen, wie sie zuvor bereits in Zusammenhang mit der Vorrichtung 1 zum Aufladen des elektrischen Energiespeichers 2 beschrieben worden sind. Analog kann auch die zuvor beschriebene Vorrichtung 1 zum Aufladen des elektrischen Energiespeichers 2 beliebige Komponenten aufweisen, die dazu geeignet sind, die nachfolgend beschriebenen Verfahrensschritte auszuführen.

In Schritt S1 wird ein Eingangsanschluss 13 einer Ladeschaltung 1 mit einem ersten Teil 21 eines elektrischen Energiespeichers 2 direkt verbunden. Parallel dazu wird in Schritt S2 eine elektrische Spannung vom Eingangsanschluss 13 der Ladeschaltung 1 in eine weitere elektrische Spannung konvertiert und in Schritt S3 die weitere elektrische Spannung an einem zweiten Teil 22 des elektrischen Energiespeichers 2 bereitgestellt.

Zusammenfassend betrifft die vorliegende Erfindung das Aufladen eines elektrischen Energiespeichers, insbesondere einer Traktionsbatterie eines Elektrofahrzeuges, wobei der elektrische Energiespeicher eine Nennspannung ausweist, die höher ist als eine zum Aufladen bereitgestellte elektrische Spannung. Hierzu wird ein Teil des elektrischen Energiespeichers direkt mit der bereitgestellten elektrischen Spannung aufgeladen, und ein weiterer Teil des elektrischen Energiespeichers wird mittels einer elektrischen Spannung aufgeladen, die von einem Gleichspannungswandler aus der zum Aufladen bereitgestellten Spannung konvertiert wird. Auf diese Weise muss nur ein Teil der für das Aufladen des elektrischen Energiespeichers erforderlichen Energie mittels eines Spannungswandlers konvertiert werden.

## Patentansprüche

1. Ladeschaltung (1) zum Aufladen eines elektrischen Energiespeichers (2), mit:
einem Eingangsanschluss (13), der dazu ausgelegt ist, mit einer elektrischen Gleichspannungsquelle (3) verbunden zu werden;
einem ersten Ausgangsanschluss (11), der dazu ausgelegt ist, mit einem ersten Teil (21) des Energiespeichers (2) verbunden zu werden;
einem zweiten Ausgangsanschluss (12), der dazu ausgelegt ist, mit einem zweiten Teil (22) des Energiespeichers (2) verbunden zu werden;
einem Gleichspannungswandler (14), der an einem Eingang des Gleichspannungswandlers (14) mit dem Eingangsanschluss (13) der Ladeschaltung (1) elektrisch verbunden ist und an einem Ausgang des Gleichspannungswandlers (14) mit dem zweiten Ausgangsanschluss (12) der Ladeschaltung (1) elektrisch verbunden ist, und der dazu ausgelegt ist, eine von der Gleichspannungsquelle (3) bereitgestellte elektrische Spannung in eine elektrische Spannung zu konvertieren, die dazu geeignet ist, den zweiten Teil (22) des elektrischen Energiespeichers (2) aufzuladen, wobei der Gleichspannungswandler (14) ferner dazu ausgelegt ist, den zweiten Teil (22) des elektrischen Energiespeichers (2) mit der konvertierten elektrischen Spannung aufzuladen.
wobei der Eingangsanschluss (13) der Ladeschaltung (1) elektrisch direkt mit dem ersten Ausgangsanschluss (11) der Ladeschaltung (1) verbunden ist.

2. Ladeschaltung (1) nach Anspruch 1, wobei ein Anschlusspunkt des ersten Ausgangsanschlusses (11) und ein Anschlusspunkt des zweiten Ausgangsanschlusses (12) elektrisch miteinander verbunden sind.

3. Ladeschaltung (1) nach Anspruch 1 oder 2, wobei der
Gleichspannungswandler (14) dazu ausgelegt ist, den Eingang des Gleichspannungswandlers (14) von dem Ausgang des Gleichspannungswandlers (14) galvanisch zu trennen.

4. Ladeschaltung (1) nach einem der Ansprüche 1 bis 3, mit einer Steuereinrichtung (15), die dazu ausgelegt ist, eine Ausgangsspannung und/oder einen Ausgangsstrom des Gleichspannungswandlers (14) zu regeln.

5. Ladeschaltung (1) nach Anspruch 4, wobei die Steuereinrichtung (15) dazu ausgelegt ist, die Ausgangsspannung des Gleichspannungswandlers (14) unter Verwendung einer elektrischen Spannung an dem ersten Ausgangsanschluss (11) einzustellen.

6. Ladeschaltung (1) nach Anspruch 4 oder 5, wobei die Steuereinrichtung (15) dazu ausgelegt ist, am Ausgang des Gleichspannungswandlers (14) eine elektrische Spannung einzustellen, sodass ein Verhältnis der elektrischen Spannung am Ausgang des Gleichspannungswandler (14) zu einer elektrischen Zielspannung für den zweiten Teil (22) des Energiespeichers (2) einem Verhältnis einer elektrischen Spannung am ersten Ausgangsanschluss (11) zu einer elektrischen Zielspannung für den ersten Teil (21) des Energiespeichers (2) entspricht.

7. Ladeschaltung (1) nach einem der Ansprüche 4 bis 6, wobei die Steuereinrichtung (15) dazu ausgelegt ist, den Ausgangsstrom des Gleichspannungswandlers (14) unter Verwendung eines elektrischen Ausgangsstroms und/oder einer elektrischen Spannung an dem ersten Ausgangsanschluss (11) einzustellen.

8. Ladeschaltung (1) nach Anspruch 7, wobei die Steuereinrichtung (15) dazu ausgelegt ist, am Ausgang des Gleichspannungswandlers (14) einen elektrischen Ausgangsstrom einzustellen, sodass ein Verhältnis des Ausgangsstroms des Gleichspannungswandler (14) zu einem Ziel-Ausgangsstrom für den zweiten Teil (22) des Energiespeichers (2) einem Verhältnis Ausgangstroms am ersten Ausgangsanschluss (11) zu einem Ziel-Ausgangsstrom für den ersten Teil (21) des Energiespeichers (2) entspricht.

9. Elektrofahrzeug, mit:
einem elektrischen Energiespeicher (2) mit einem ersten Anschlusspunkt,
einem zweiten Anschlusspunkt und einem Mittenanschluss (M), wobei ein erster Teil (21) des elektrischen Energiespeichers (2) mit dem ersten Anschlusspunkt und dem Mittenanschluss (M) elektrisch verbunden ist und
ein zweiter Teil (22) des elektrischen Energiespeichers (2) mit dem zweiten Anschlusspunkt und dem Mittenanschluss (M) elektrisch verbunden ist; und
einer Ladeschaltung zum Aufladen eines elektrischen Energiespeichers nach einem der Ansprüche 1 bis 8.

10. Verfahren zum Aufladen eines elektrischen Energiespeichers (2) mittels einer Ladeschaltung nach einem der Ansprüche 1 - 8, mit den Schritten:
direktes elektrisches Verbinden (S1) eines Eingangsanschlusses (13) einer
Ladeschaltung (1) mit einem ersten Teil (21) des elektrischen
Energiespeichers (2);
Konvertieren (S2) einer elektrischen Spannung am Eingangsanschluss (13) der Ladeschaltung (1) in eine weitere elektrische Spannung; und
Bereitstellen (S3) der weiteren elektrischen Spannung an einem zweiten Teil (22) des elektrischen Energiespeichers (2).

## Claims

1. Charging circuit (1) for charging an electrical energy store (2), having:
an input connection (13), which is designed to be connected to an electrical DC voltage source (3);
a first output connection (11), which is designed to be connected to a first part (21) of the energy store (2);
a second output connection (12), which is designed to be connected to a second part (22) of the energy store (2);
a DC-DC voltage converter (14), which is electrically connected to the input connection (13) of the charging circuit (1) at an input of the DC-DC voltage converter (14) and is electrically connected to the second output connection (12) of the charging circuit (1) at an output of the DC-DC voltage converter (14), and which is designed to convert a voltage provided by the DC voltage source (3) into a voltage that is suitable for charging the second part (22) of the electrical energy store (2), the DC-DC voltage converter (14) further being designed to charge the second part (22) of the electrical energy store (2) using the converted voltage,
wherein the input connection (13) of the charging circuit (1) is electrically directly connected to the first output connection (11) of the charging circuit (1).

2. Charging circuit (1) according to Claim 1, wherein a connection point of the first output connection (11) and a connection point of the second output connection (12) are electrically connected to one another.

3. Charging circuit (1) according to Claim 1 or 2, wherein the DC-DC voltage converter (14) is designed to electrically isolate the input of the DC-DC voltage converter (14) from the output of the DC-DC voltage converter (14).

4. Charging circuit (1) according to any one of Claims 1 to 3, having a control device (15), which is designed to control an output voltage and/or an output current of the DC-DC voltage converter (14).

5. Charging circuit (1) according to Claim 4, wherein the control device (15) is designed to adjust the output voltage of the DC-DC voltage converter (14) using a voltage on the first output connection (11).

6. Charging circuit (1) according to Claim 4 or 5, wherein the control device (15) is designed to set a voltage at the output of the DC-DC voltage converter (14) so that a ratio of the voltage at the output of the DC-DC voltage converter (14) to a target voltage for the second part (22) of the energy store (2) corresponds to a ratio of a voltage on the first output connection (11) to a target voltage for the first part (21) of the energy store (2).

7. Charging circuit (1) according to any one of Claims 4 to 6, wherein the control device (15) is designed to adjust the output current of the DC-DC voltage converter (14) using an electrical output current and/or a voltage on the first output connection (11).

8. Charging circuit (1) according to Claim 7, wherein the control device (15) is designed to set an electrical output current at the output of the DC-DC voltage converter (14) so that a ratio of the output current of the DC-DC voltage converter (14) to a target output current for the second part (22) of the energy store (2) corresponds to a ratio of the output current on the first output connection (11) to a target output current for the first part (21) of the energy store (2).

9. Electric vehicle, having:
an electrical energy store (2) having a first connection point, a second connection point and a centre connection (M), wherein a first part (21) of the electrical energy store (2) is electrically connected to the first connection point and the centre connection (M), and a second part (22) of the electrical energy store (2) is electrically connected to the second connection point and the centre connection (M); and
a charging circuit for charging an electrical energy store according to any one of Claims 1 to 8.

10. Method for charging an electrical energy store (2) by means of a charging circuit according to any one of Claims 1 - 8, comprising the steps of:
directly electrically connecting (S1) an input connection (13) of a charging circuit (1) to a first part (21) of the electrical energy store (2);
converting (S2) a voltage on the input connection (13) of the charging circuit (1) into a further voltage; and
providing (S3) the further voltage on a second part (22) of the electrical energy store (2).

## Revendications

1. Circuit de charge (1) permettant de charger un accumulateur d'énergie électrique (2), comprenant :
une borne d'entrée (13), qui est conçue pour être connectée à une source de tension électrique continue (3) ;
une première borne de sortie (11), qui est conçue pour être connectée à une première partie (21) de l'accumulateur d'énergie (2) ;
une seconde borne de sortie (12), qui est conçue pour être connectée à une seconde partie (22) de l'accumulateur d'énergie (2) ;
un convertisseur continu-continu (14), qui est connecté électriquement au niveau d'une entrée du convertisseur continu-continu (14) à la borne d'entrée (13) du circuit de charge (1) et qui est connecté électriquement au niveau d'une sortie du convertisseur continu-continu (14) à la seconde borne de sortie (12) du circuit de charge (1), et qui est conçu pour convertir une tension électrique fournie par la source de tension continue (3) en une tension électrique appropriée pour charger la seconde partie (22) de l'accumulateur d'énergie électrique (2), le convertisseur continu-continu (14) étant en outre conçu pour charger la seconde partie (22) de l'accumulateur d'énergie électrique (2) au moyen de la tension électrique convertie,
la borne d'entrée (13) du circuit de charge (1) étant connectée électriquement directement à la première borne de sortie (11) du circuit de charge (1).

2. Circuit de charge (1) selon la revendication 1, dans lequel un point de connexion de la première borne de sortie (11) et un point de connexion de la seconde borne de sortie (12) sont électriquement connectés l'un à l'autre.

3. Circuit de charge (1) selon la revendication 1 ou 2, dans lequel le convertisseur continu-continu (14) est conçu pour isoler galvaniquement l'entrée du convertisseur continu-continu (14) de la sortie du convertisseur continu-continu (14).

4. Circuit de charge (1) selon l'une quelconque des revendications 1 à 3, comprenant un dispositif de commande (15) qui est conçu pour réguler une tension de sortie et/ou un courant de sortie du convertisseur continu-continu (14).

5. Circuit de charge (1) selon la revendication 4, dans lequel le dispositif de commande (15) est conçu pour ajuster la tension de sortie du convertisseur continu-continu (14) en utilisant une tension électrique sur la première borne de sortie (11).

6. Circuit de charge (1) selon la revendication 4 ou 5, dans lequel le dispositif de commande (15) est conçu pour régler une tension électrique à la sortie du convertisseur continu-continu (14) de telle sorte qu'un rapport de la tension électrique sur la sortie du convertisseur continu-continu (14) à une tension électrique cible destinée à la seconde partie (22) de l'accumulateur d'énergie (2) corresponde à un rapport d'une tension électrique sur la première borne de sortie (11) à une tension électrique cible destinée à la première partie (21) de l'accumulateur d'énergie (2).

7. Circuit de charge (1) selon l'une quelconque des revendications 4 à 6, dans lequel le dispositif de commande (15) est conçu pour régler le courant de sortie du convertisseur continu-continu (14) en utilisant un courant électrique de sortie et/ou une tension électrique sur la première borne de sortie (11).

8. Circuit de charge (1) selon la revendication 7, dans lequel le dispositif de commande (15) est conçu pour régler un courant électrique de sortie à la sortie du convertisseur continu-continu (14) de telle sorte qu'un rapport du courant de sortie du convertisseur continu-continu (14) à un courant de sortie cible destiné à la seconde partie (22) de l'accumulateur d'énergie (2) corresponde à un rapport du courant de sortie sur la première borne de sortie (11) à un courant de sortie cible destiné à la première partie (21) de l'accumulateur d'énergie (2).

9. Véhicule électrique, comprenant :
un accumulateur d'énergie électrique (2) ayant un premier point de connexion, un second point de connexion et une connexion centrale (M), une première partie (21) de l'accumulateur d'énergie électrique (2) étant connectée électriquement au premier point de connexion et à la connexion centrale (M), et une seconde partie (22) de l'accumulateur d'énergie électrique (2) étant connectée électriquement au second point de connexion et à la connexion centrale (M) ; et
un circuit de charge destiné à charger un accumulateur d'énergie électrique selon l'une quelconque des revendications 1 à 8.

10. Procédé permettant de charger un accumulateur d'énergie électrique (2) au moyen d'un circuit de charge selon l'une quelconque des revendications 1 à 8, comprenant les étapes consistant à :
connecter électriquement directement (S1) une borne d'entrée (13) d'un circuit de charge (1) à une première partie (21) de l'accumulateur d'énergie électrique (2) ;
convertir (S2) une tension électrique sur la borne d'entrée (13) du circuit de charge (1) en une autre tension électrique ; et
fournir (S3) l'autre tension électrique à une seconde partie (22) de l'unité de stockage d'énergie électrique (2).
